# EUROPÄISCHE PATENTSCHRIFT

(11) **EP 3 090 622 B1**
(45) Veröffentlichungstag und Bekanntmachung des Hinweises auf die Patenterteilung: **18.04.2018**
(21) Anmeldenummer: 16156655.9
(22) Anmeldetag: 22.02.2016
(51) Int. Cl.: A01F 15/07, A01F 15/12, A01F 15/14

(54) **BALLENPRESSE FÜR LANDWIRTSCHAFTLICHES ERNTEGUT**
BALLING PRESS FOR AGRICULTURAL HARVESTED MATERIALS
PRESSE À BALLES POUR RÉCOLTE AGRICOLE

(30) Priorität: 04.05.2015 DE 202015003273 U
(43) Veröffentlichungstag der Anmeldung: 09.11.2016
(73) Patentinhaber: PÖTTINGER Landtechnik GmbH, 4710 Grieskirchen (AT)
(72) Erfinder: Kleesadl, Johann, 4181 Oberneukirchen (AT); Lackner, Christian, 4060 Leonding (AT); Bumberger, Rainer, 4141 Pfarrkirchen (AT)
(74) Vertreter: Thoma, Michael

(56) Entgegenhaltungen:
- EP-A1- 0 978 231
- EP-A1- 1 776 860
- EP-A1- 2 430 904
- WO-A1-2005/096801

## Beschreibung

Die vorliegende Erfindung betrifft eine Ballenpresse für landwirtschaftliches Erntegut mit einer Ballenformkammer zum Formen des Ernteguts zu Ballen sowie einer Wickelvorrichtung zum Umwickeln der Ballen mit einem Wickelgut wie Netz, Folie und/oder Schnur, wobei die Wickelvorrichtung eine Zuführvorrichtung zum Zuführen des Wickelguts durch einen Einführspalt in die Ballenformkammer aufweist, wobei die Zuführvorrichtung auf den Einführspalt zu in eine Zuführstellung und von dem Einführspalt weg in eine Zwischen- und/oder Ausgangsstellung bewegbar ausgebildet ist.

Die von Ballenpressen geformten Erntegutballen werden nach dem Ballenformprozess regelmäßig umhüllt bzw. eingewickelt, um den Ballen zusammenzuhalten und/oder zu schützen. Hierbei kann als Wickelgut eine Schnur oder ein ähnliches Garn bzw. ein Faden oder auch ein flächiges Wickelgut wie beispielsweise ein Netz oder eine Folie oder auch Mischungen bzw. Kombinationen hiervon verwendet werden. Der Wickelprozess kann hierbei vorteilhafterweise noch in der Ballenformkammer erfolgen, in dem das Erntegut zum Ballen geformt wurde, wobei hierzu das Wickelgut durch einen Einführspalt in die genannte Ballenformkammer eingeführt wird, nachdem der Ballen fertig oder zumindest ausreichend weit geformt wurde.

Um das Wickelgut durch den genannten Einführspalt in die Ballenformkammer einzuführen, werden Zuführvorrichtungen verwendet, die beispielsweise über Förderwalzen einen Vorschub des Wickelguts erzeugen können und für den Einführprozess vorteilhafterweise mehr oder minder unmittelbar vor dem Einführspalt, ggf. auch in dem Einführspalt, beispielsweise mittels einer Einführzunge oder dergleichen, positioniert sind. Ist das Wickelgut in die Ballenformkammer ausreichend weit ausgeführt, erfasst üblicherweise der darin befindliche Ballen und die den Ballen formenden Formelemente wie Formkammerrollen oder Riemen bzw. Bänder das Wickelgut und zieht es beim Umwickeln des Ballens in die Formkammer ein, wobei zum Straffen bzw. Spannen des Wickelguts das Abziehen bzw. Einziehen des Wickelguts von der Wickelvorrichtung durch eine geeignete Bremse gebremst werden kann. Ist der Ballen fertig umwickelt bzw. kurz davor, wird das Wickelgut mit einer Abtrennvorrichtung abgeschnitten bzw. abgetrennt.

Um zu verhindern, dass die Zuführvorrichtung durch Brösel oder Bröckel bzw. Erntegutstücke verschmutzt wird, die durch den Einführspalt für das Wickelgut austreten können, wurde bereits vorgeschlagen, die Zuführvorrichtung für das Wickelgut von dem genannten Einführspalt weg zu fahren, während die Zuführvorrichtung nicht benötigt wird, d.h. im Wesentlichen während des gesamten Ballenförmprozesses, und die Zuführvorrichtung nur dann an den Einführspalt hinzufahren, wenn tatsächlich das Wickelgut zuzuführen ist. Solche hin- und wegfahrbare Zuführvorrichtungen zeigen beispielsweise die Schriften WO 2005/096801 A1, DE 102 43 294 A1, DE 10 2004 001 773 A1, EP 17 76 860 A1 oder EP 0 978 231 B1. Um Fehler beim Zuführen des Wickelguts zu vermeiden, schlägt die EP 0 978 231 B1 vor, mittels eines Sensors die Größe und Dichte des Ballens zu bestimmen und die Wickelgutzuführvorrichtung nur dann in die Zuführstellung zu fahren, wenn die genannten Größen vorbestimmte Werte erreicht haben.

Die DE 102 43 294 A1 sieht vor, bei Erreichen des gewünschten Ballendurchmessers oder eines gewünschten Pressdrucks antreibbare Zuführwalzen anzutreiben, um das Wickelgut aktiv in den Einführspalt hineinzufördern, wo es dann vom umlaufenden Ballen mitgenommen wird. Der Vorschub des Wickelguts wird dabei durch ein rotierend antreibbares Vorzugswalzenpaar sowie eine nachfolgend angeordnete, ebenfalls rotatorisch antreibbare Vorschubwalze bewirkt. Die mehreren hintereinander angeordneten Vorschubgeber neigen jedoch dazu, das Wickelgut entweder zu überspannen oder in Falten zu werfen bzw. zum Knittern zu bringen, wenn die Synchronisierung der Vorschubgeber nicht wirklich exakt ist. Eine solche Synchronisierung ist jedoch nur aufwändig zu erreichen. Zudem wird die Zuführvorrichtung insgesamt recht groß und Platz raubend.

Die Steuerung der verschiedenen Wickelprozessschritte ist bei Wickelvorrichtungen mit hin- und wegfahrbaren Zuführvorrichtungen bislang generell aufwändig und fehlerbehaftet, beispielsweise hinsichtlich der Abstimmung des Vorschubantriebs mit dem gewünschten Straffziehen des Wickelguts oder dem Abtrennen des Wickelguts gegen Ende des Wickelprozesses.

Der vorliegenden Erfindung liegt daher die Aufgabe zugrunde, eine verbesserte Ballenpresse der genannten Art zu schaffen, die Nachteile des Standes der Technik vermeidet und Letzteren in vorteilhafter Weise weiterbildet. Vorzugsweise soll trotz Abstandsveränderbarkeit der Zuführvorrichtung vom Einführspalt mit einfachen Mitteln eine präzise Zuführung des Wickelguts ohne Neigung zum Verheddern sowie ein präzises und effizientes Abtrennen und/oder Straffziehen des Wickelguts gegen Ende des Wickelprozesses erreicht werden.

Erfindungsgemäß wird die genannte Aufgabe durch eine Ballenpresse gemäß Anspruch 1 gelöst. Bevorzugte Ausgestaltungen der Erfindung sind Gegenstand der abhängigen Ansprüche.

Es wird also vorgeschlagen, das Wickelgut nur an einem Punkt aktiv auf den Einführspalt zuzufördern und keine mehreren, hintereinander vorgesehenen Vorschuberzeuger vorzusehen. Erfindungsgemäß umfasst die Zuführvorrichtung lediglich einen antreibbaren Vorschubgeber zum aktiven Zuführen des Wickelguts in den Einführspalt, wobei dieser nur eine Vorschubgeber auf den Einführspalt zu in die Zuführstellung und von dem Einführspalt weg in eine Zwischen- und/oder Ausgangsstellung bewegbar ausgebildet und zumindest in der genannten Zuführstellung antreibbar ist. Durch den nur einen Vorschubgeber kann die Zuführung des Wickelguts stabiler gestaltet werden, wobei das Wickelgut weder zum Überspannen noch zum Verheddern bzw. Faltigwerden neigt. Durch die Zustellbarkeit des genannten Vorschubgebers auf den Einführspalt zu und von diesem weg kann dennoch mit nur einem Vorschubgeber ein präzises Zuführen erzielt werden, wobei gleichzeitig Verschmutzungsprobleme am Vorschubgeber vermieden werden können.

Der genannte Vorschubgeber kann in Weiterbildung der Erfindung aus einem Vorschubwalzenpaar bestehen, zwischen denen das Wickelgut hindurchförderbar ist und von denen zumindest eine Vorschubrolle antreibbar ausgebildet ist.

Insbesondere kann eine antreibbare Vorschubrolle vorgesehen sein, die an ihrer Umfangsseite mit einer die Vorschubwirkung verbessernden Oberflächenstruktur versehen sein kann, beispielsweise einer Gummibeschichtung oder einer reliefartigen Riffelung, je nachdem, welches Wickelgut verwendet wird. Die andere Walze des genannten Vorschubwalzen- bzw. Vorschubrollenpaars kann als Andruck- bzw. Anpresswalze dienen und gegen die angetriebene Vorschubwalze bzw. -rolle vorgespannt sein, um das Wickelgut mit der notwendigen Kraft gegen die angetriebene Vorschubwalze zu drücken. Gegebenenfalls kann auch die zweite Vorschubwalze bzw. -rolle des Walzenpaars angetrieben sein, wobei in diesem Fall vorteilhafterweise der Antrieb der beiden Rollen miteinander synchronisiert ist, beispielsweise durch ein kämmendes Zahnradpaar.

Der genannte Vorschubgeber kann je nach Betriebszyklus bzw. -zustand auf den Einführspalt zugefahren bzw. von diesem wegbewegt werden, insbesondere derart, dass der Vorschubgeber nur dann, wenn ein fertig geformter bzw. näherungsweise fertig geformter Ballen zu umwickeln ist, an den Einführspalt hingefahren wird, um das Wickelgut durch den Einführspalt in die Ballenformkammer einzuführen. Der dem Vorschubgeber zugeordnete Vorschubantrieb kann dabei derart gesteuert sein, dass der Vorschubgeber nur angetrieben wird, wenn der Vorschubgeber an den Einführspalt hingefahren ist. Je nach Systemausbildung kann es vorteilhafterweise jedoch auch vorgesehen sein, dass der Vorschubgeber auch in der Zwischen- und/oder Ausgangsstellung antreibbar ist, beispielsweise um das Wickelgut vorzubereiten oder einzufädeln oder straff zu ziehen, um den Wickelprozess dann schneller ausführen zu können.

Vorteilhafterweise kann der genannte Vorschubgeber von einem Vorschubantrieb angetrieben werden, der hinsichtlich seiner für den Vorschubgeber bereitgestellten Vorschubgeschwindigkeit unabhängig von Antriebsgeschwindigkeiten anderer Ballenpressenfunktionselementen wie Ballenformwalzen einstellbar ausgebildet ist. Insbesondere kann der Antrieb mechanisch entkoppelt von anderen Ballenpressenfunktionselementen ausgebildet sein, so dass die Vorschubgeschwindigkeit unabhängig von Drehzahlen oder Antriebsgeschwindigkeiten anderer Ballenformelemente wie Ballenformwalzen, Starterwalzen, oder Riemenumlenkrollen oder auch ganz unabhängig von einer in die Presse führenden Zapfwellendrehzahl eingestellt werden und an die Wickelerfordernisse angepasst werden kann. Beispielsweise kann ein Wickelgut wie beispielsweise ein Netz mit einer höheren Vorschubgeschwindigkeit zugeführt werden, während ein anderes Wickelgut wie beispielsweise eine Folie mit einer niedrigeren Vorschubgeschwindigkeit zugeführt werden kann, beispielsweise um eine Reissen zu vermeiden. Ein solcher unabhängig geschwindigkeitsvariabel einstellbarer Vorschubantrieb kann auch vorteilhaft sein, wenn mehr als nur ein antreibbarer Vorschubgeber zum Zuführen des Wickelguts vorgesehen ist.

Alternativ oder zusätzlich kann auch mit unterschiedlichen Geschwindigkeitsprofilen gefahren werden, beispielsweise mit einer langsam ansteigenden Vorschubgeschwindigkeit für reibungsglatte und/oder reißanfällige Wickelgüter und mit schnellansteigenden Vorschubgeschwindigkeiten für reibungsrauhe oder reißfestere Wickelgüter. Alternativ oder zusätzlich kann auch die Antriebs-Zeitspanne bzw. das Vorschubintervall variabel eingestellt werden. Vorteilhafterweise kann die Vorschubgeschwindigkeit des Wickelgut-Vorschubgebers auch die konstant laufenden oder ggf. auch stehenden Ballenformwalzen variabel eingestellt, d.h. erhöht und/oder erniedrigt bzw. variiert werden, um die Ballenwicklung optimal zu bewerkstelligen.

In vorteilhafter Weiterbildung der Erfindung kann der Vorschubantrieb einen drehzahlvariabel steuerbaren Elektro- oder Hydromotor zum Antreiben des Vorschubgebers aufweisen Insbesondere ein Elektroantrieb ist einfach steuerbar und platzsparend positionierbar.

In Weiterbildung der Erfindung kann der genannte Vorschubantrieb zusammen mit dem Vorschubgeber auf den Einführspalt zu und von diesem weg bewegbar ausgebildet sein.

Die Bewegung der Zuführvorrichtung einschließlich der genannten Verfahrbarkeit des Vorschubgebers kann hierbei grundsätzlich verschieden beschaffen bzw. gesteuert sein. Prinzipiell könnte hier eine schwenkbare Anordnung der Zuführvorrichtung oder eine translatorische Verschiebbarkeit vorgesehen sein. In bevorzugter Weiterbildung der Erfindung jedoch ist die Zuführvorrichtung mittels einer Lenkeranordnung insbesondere in Form einer Parallelogrammlenkeranordnung zwischen der Ausgangsstellung, der Zuführstellung und der Zwischenstellung hin und her bewegbar. Mittels geeigneter Ausbildung der Lenkeranordnung kann insbesondere eine leicht bogenförmige Bewegungsbahn der Zuführvorrichtung realisiert werden, ohne hierbei eine zu starke Veränderung der Winkellage der Zuführvorrichtung in Kauf nehmen zu müssen. Hierdurch können konstante Abzieh- bzw. Vorschubverhältnisse für das Wickelgut erzielt werden, ohne dass sich beispielsweise zwischen der Zuführstellung und der Zwischenstellung die Ablaufwinkel zu stark ändern würden.

Das Zu- und Wegfahren der Zuführvorrichtung kann dabei vorteilhafterweise in Abhängigkeit des Ballenformprozesses gesteuert werden, um einerseits möglichst wenig Verschmutzung des Wickelguts und der Komponenten der Zuführvorrichtung zu erleiden, andererseits aber möglichst kurze Taktzeiten für den Bindeprozess zu erreichen. Vorteilhafterweise kann die Zuführvorrichtung schon in die Bereitstellung gefahren werden, bevor der Ballen fertiggewickelt ist, um keine Zeit für übermäßig lange Zufahrwege zu verlieren, dennoch aber im restlichen Nicht-Wickelzyklus ausreichend weit vom Ballenformer beabstandet parken zu können. In Weiterbildung der Erfindung kann ein Stellantrieb zum Verstellen der Zuführvorrichtung auf den Einführspalt zu und/oder von dem Einführspalt weg von einer Steuervorrichtung in Abhängigkeit des Ballenformprozesses in der Ballenformkammer steuerbar ist, wobei die genannte Steuervorrichtung mit Bestimmungsmitteln zum Bestimmen einer Ballengröße und/oder Ballenpressdichte eines in der Ballenformkammer geformten Ballens verbindbar ist und in Abhängigkeit eines Signals der Bestimmungsmittel die Zuführvorrichtung vor Beendigung des Ballenformvorgangs in die Zwischenstellung verfährt. Beispielsweise kann die genannte Bereit- bzw. Zwischenstellung aus der Ausgangs- bzw. Parkstellung heraus angefahren werden, sobald der in der Ballenformkammer geformte Ballen 90% seines fertigen Solldurchmessers und/oder 95% seiner Soll-Pressdichte erreicht hat. Hierzu können entsprechende Sensoren den Ballenformprozess in der Ballenformkammer überwachen, in Abhängigkeit derer dann die Steuervorrichtung den genannten Stellantrieb steuert.

In Weiterbildung der Erfindung ist vorteilhafterweise vorgesehen, die Stellbewegung der Zuführvorrichtung bzw. des Vorschubgebers auf den Einführspalt zu und/oder vom Einführspalt weg zur Steuerung des Abtrennprozesses bzw. als Steuergröße für die Abtrennvorrichtung zu verwenden. Das Abtrennen des Wickelguts kann durch Bewegen der Zuführvorrichtung auf den Einführspalt zu und/oder vom Einführspalt weg gesteuert und ausgelöst werden. Vorteilhafterweise ist der Abtrennvorrichtung eine Spannvorrichtung zugeordnet, die durch Bewegen der Zuführvorrichtung in die Zuführstellung und/oder zurück in die Zwischenstellung spannbar ist, wobei der Abtrennvorrichtung weiterhin eine Rückhaltevorrichtung zum Rückhalten der Abtrennvorrichtung entgegen der Spannkraft der Spannvorrichtung zugeordnet ist, wobei die Rückhaltevorrichtung durch Bewegen der Zuführvorrichtung von der genannten Zwischenstellung in die Ausgangsstellung lösbar ist, so dass die Abtrennvorrichtung von der Spannvorrichtung getrieben das Wickelgut durchtrennt.

Vorteilhafterweise wird das Wickelgut also automatisch in Abhängigkeit der Stellung der Zuführvorrichtung durchtrennt, wobei die Stellbewegungen eines Zustell- und Wegfahrzyklus der Zuführvorrichtung dazu genutzt werden, die Abtrennvorrichtung zu spannen und zum gewünschten Zeitpunkt auszulösen.

Insbesondere wird dabei von dem Ansatz ausgegangen, dass die Zuführvorrichtung im Wesentlichen nur zum Einfädeln des Wickelguts in den Einführspalt in der Zuführstellung am Einführspalt gehalten wird und vorteilhafterweise schon während des Wickelprozesses vom Einführspalt wieder weg in eine Zwischenstellung gefahren wird, wobei dieser Teil des Zustell- und Wegfahrzyklus zum Spannen der Abtrennvorrichtung genutzt wird, so dass die Abtrennvorrichtung noch während des Wickelprozesses bzw. zumindest gegen Ende des Wickelprozesses betriebsbereit ist und nur noch ausgelöst zu werden braucht, sobald der Wickelprozess ausreichend weit fortgeschritten ist. Dies kann in einfacher Weise dadurch erfolgen, dass die Zuführvorrichtung aus der genannten Zwischenstellung weiter vom Einführspalt weg zu ihrer Ausgangsstellung hin verfahren wird.

In Weiterbildung der Erfindung wird eine vorzugsweise frühe Phase des Zustell- und Wegfahrzyklus der Zuführvorrichtung auch dazu genutzt, die Abtrennvorrichtung in ihre Rückhaltestellung zu bewegen, in der die Abtrennvorrichtung von der Rückhaltevorrichtung zurückgehalten und vom Wickelgut außer Eingriff ist. Die Abtrennvorrichtung kann durch Bewegen der Zuführvorrichtung in die genannte Rückhaltestellung gezwungen werden, bevor die Spannvorrichtung gespannt wird oder auch zumindest teilweise zeitlich überlappend mit dem Spannprozess, d.h. zumindest teilweise während die Spannvorrichtung gespannt wird. Vorteilhafterweise wird die Abtrennvorrichtung von der Zuführvorrichtung in die Rückhaltestellung gezwungen, während die Zuführvorrichtung aus ihrer Ausgangsstellung zur Zuführstellung hin bewegt wird.

Um die Abtrennvorrichtung in ihre Bereitstellung zu verbringen, kann die Zuführvorrichtung einen Stellanschlag aufweisen bzw. mit einem solchen verbunden sein, der beim Bewegen der Zuführvorrichtung von der Ausgangsstellung in die Zuführstellung mit der Abtrennvorrichtung in Eingriff gerät und die Abtrennvorrichtung beim Bewegen der Zuführvorrichtung in die Rückhaltestellung zwingt.

Um die gespannte Abtrennvorrichtung zur gewünschten Phase bzw. zum gewünschten Zeitpunkt des Hin- und Wegfahrzyklus der Zuführeinrichtung auszulösen und die Abtrennvorrichtung freizugeben, kann die Zuführvorrichtung einen Auslöseanschlag besitzen bzw. mit einem solchen Auslöseanschlag verbunden sein, der gegen Ende des genannten Hin- und Wegfahrzyklus, insbesondere beim Bewegen der Zuführvorrichtung von der genannten Zwischenstellung in die Ausgangsstellung mit der Rückhaltevorrichtung in Eingriff gerät und diese in ihre freigebende bzw. gelöste Stellung zwingt, so dass die Abtrennvorrichtung von der Spannkraft der Spannvorrichtung getrieben auf das Wickelgut zufahren kann und dieses dabei durchtrennt.

Die Abtrennvorrichtung kann hierbei grundsätzlich verschieden ausgebildet sein, beispielsweise nach Art eines Messers schneiden oder nach Art einer Schere abscheren oder nach Art einer Rollklinge zerteilen. In vorteilhafter Weiterbildung der Erfindung kann die Abtrennvorrichtung ein Trennwerkzeug umfassen, das mittels zumindest eines Schwenkarms gelagert ist, der schwenkbar an einem feststehenden, sich mit der Zuführvorrichtung nicht mitbewegenden Rahmenteil der Wickelvorrichtung bzw. der Ballenpresse gelagert ist. Grundsätzlich wäre es auch denkbar, die Abtrennvorrichtung an der beweglichen Zuführvorrichtung anzuordnen, um die Position relativ zu den Zuführ-Vorschuborganen festzulegen. Bevorzugt ist jedoch eine Lagerung an einem feststehenden Rahmenteil, so dass die Betätigung durch Bewegung der Zuführvorrichtung einfacher gestaltet werden kann. Anstelle eines Schwenkarms können auch mehrere Schwenkarme nach Art einer Lenkeranordnung vorgesehen sein, oder alternativ hierzu kann auch eine translatorische Verschiebbarkeit ähnlich einer Guillotine vorgesehen sein. Die Lagerung an einem Schwenkarm ermöglicht es jedoch, mit einer Platz sparenden Anordnung einen ausreichenden Stellweg für die Spannvorrichtung zu erzielen, und gleichzeitig über die Bemessung des Hebelarms die Betätigungsstärke und -geschwindigkeit einzustellen.

In Weiterbildung der Erfindung kann auch die Rückhaltevorrichtung und/oder die Spannvorrichtung an einem feststehenden, sich mit der Zuführvorrichtung nicht mitbewegenden Rahmenteil der Wickelvorrichtung bzw. der Ballenpresse gelagert sein. Dies vereinfacht das Auslösen der Rückhaltevorrichtung bzw. das Spannen der Spannvorrichtung durch Bewegen der Zuführvorrichtung.

Um das Wickelgut beim Umwickeln des Ballens spannen zu können, kann in Weiterbildung der Erfindung eine Bremse vorgesehen sein, mittels derer das Einziehen bzw. der Vorschub des Wickelguts gebremst werden kann. In Weiterbildung der Erfindung kann auch die genannte Bremse in Abhängigkeit der Bewegung der Zuführvorrichtung auf den Einführspalt zu und/oder von dem Einführspalt weg gesteuert werden, wobei auch hier die Stellung der Zuführvorrichtung als Steuergröße für die Betätigung und/oder die Bremskraft der Bremse dienen kann. In Weiterbildung der Erfindung kann die Bremse durch Bewegen der Zuführvorrichtung aktivierbar und/oder deaktivierbar sein derart, dass die Bremse beim Bewegen der Zuführvorrichtung in die Zuführstellung deaktiviert oder gelockert wird und bei Bewegen der Zuführvorrichtung in die Ausgangsstellung aktiviert bzw. stärker angelegt wird. Insbesondere kann die genannte Bremse schon beim Bewegen der Zuführvorrichtung von der Zuführstellung in die Zwischenstellung aktiviert werden, so dass beim Einziehen des Wickelguts bei in der Zwischenstellung befindlicher Zuführvorrichtung der Einzug des Wickelguts gebremst wird. In vorteilhafter Weiterbildung der Erfindung kann die Bremswirkung dann erhöht werden, wenn die Zuführvorrichtung aus der genannten Zwischenstellung vom Einführspalt weiter weg in die Ausgangsstellung gefahren wird.

Um die genannte Bremse durch Bewegen der Zuführvorrichtung betätigen zu können, kann die Zuführvorrichtung einen Bremsanschlag aufweisen bzw. mit einem solchen Bremsanschlag verbunden sein, der beim Bewegen der Zuführvorrichtung auf den Einführspalt zu bzw. vom Einführspalt weg mit der Bremse in Eingriff gerät und diese in der genannten Weise betätigt.

Um zu prüfen bzw. zu überwachen, ob das Einfädeln des Wickelguts in den Einführspalt erfolgreich bewerkstelligt wurde und der Ballen in der Ballenformkammer das Wickelgut mitnimmt bzw. vom Wickelgut umwickelt wird, ist eine Steuervorrichtung zur Steuerung des Vorschubantriebs für das Wickelgut vorgesehen, die nach einem oder mehreren anfänglichen Vorschubzyklen den Vorschubantrieb abstellt, um dann zu erfassen, ob das Wickelgut auch bei abgestelltem Vorschubantrieb weiter eingezogen wird. Hierzu ist eine geeignete Erfassungsvorrichtung beispielsweise in Form einer Sensorik vorgesehen, die eine Bewegung des Wickelguts selbst oder die Bewegung eines damit in Verbindung stehenden Zuführorgans prüft bzw. erfasst. Beispielsweise kann ein Sensor die Drehbewegung einer Breitstreckwalze erfassen, mittels derer das zuzuführende Wickelgut in der Breite gestreckt wird und die sich nur dann dreht, wenn das Wickelgut tatsächlich eingezogen wird.

Stellt die Steuervorrichtung bzw. die Erfassungsvorrichtung nach Abstellen des Vorschubantriebs fest, dass die Einzugsbewegung des Wickelguts stockt bzw. stoppt, wird der Vorschubantrieb ein weiteres Mal eingeschaltet oder, wenn schon mehrere Versuche erfolglos waren, kann eine Fehlermeldung abgesetzt werden. Hierdurch kann in besonders einfacher Weise der erfolgreiche Einzug des Wickelguts überwacht werden.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht einer Ballenpresse nach einer vorteilhaften Ausführung der Erfindung, die in Nachbarschaft zu einer Ballenformkammer eine Wickelvorrichtung aufweist, die in ihrer Ausgangsstellung gezeigt ist,
- Fig. 2:: eine ausschnittsweise, perspektivische Darstellung der Wickelvorrichtung aus Fig. 1 in der Ausgangsstellung,
- Fig. 3:: eine Schnittansicht der Wickelvorrichtung aus Fig. 2,
- Fig. 4:: eine Seitenansicht der Wickelvorrichtung aus den vorhergehenden Figuren in der Ausgangsstellung,
- Fig. 5:: eine Seitenansicht der Wickelvorrichtung ähnlich Fig. 4, wobei die Zuführvorrichtung in ihrer Zuführstellung am Einführspalt gezeigt ist,
- Fig. 6:: eine Seitenansicht der Wickelvorrichtung ähnlich den Figuren 4 und 5, wobei die Zuführvorrichtung in ihrer zurückgefahrenen Zwischenstellung beim Umwickeln des Ballens gezeigt ist, und
- Fig. 7:: eine Seitenansicht der Wickelvorrichtung ähnlich den vorhergehenden Figuren 4 bis 6, wobei die Zuführvorrichtung in ihrer vollends zurückgefahrenen Abschneidestellung gezeigt ist, in der die Abtrennvorrichtung das Wickelgut abtrennt und die der Ausgangsposition für einen nächsten Bindevorgang entspricht.

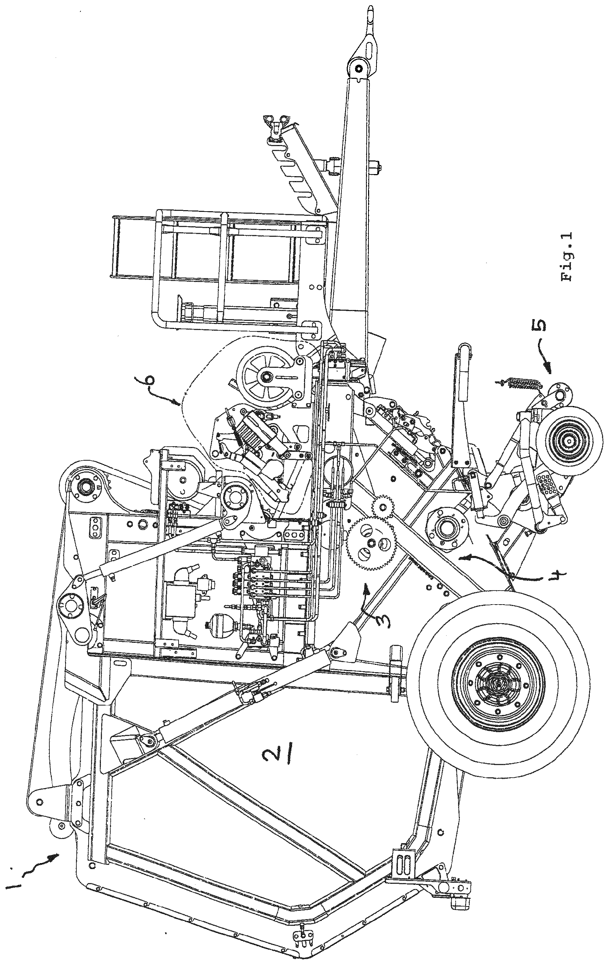

Wie Fig. 1 zeigt, kann die Ballenpresse 1 als Anbaugerät ausgebildet sein, die über eine Deichsel an einen Schlepper anbaubar ist und mit einem Fahrwerk am Boden abgestützt ist. Mittels einer Aufnahmevorrichtung 5, die beispielsweise eine rotierende Stachelwalze in Form einer Pickup umfassen kann, sammelt die Ballenpresse 1 am Boden liegendes Erntegut auf und führt es durch einen Einlass 4 in eine Ballenformkammer 2, die fest oder auch variabel ausgebildet sein kann. Geeignete Formelemente 3 wie beispielsweise antreibbare oder nicht antreibbare Rollen und/oder umlaufende Bänder oder dergleichen, die die Ballenformkammer 2 umfangsseitig begrenzen, formen aus dem durch den Einlass 4 in die Ballenformkammer 2 gelangenden Erntegut Ballen.

Um die Ballen mit einem Wickelgut wie beispielsweise einer Schnur, einem Netz oder einer Folie umwickeln zu können, ist an einer Außenseite der Ballenformkammer 2 benachbart hierzu eine Wickelvorrichtung 6 vorgesehen, die, wie Fig. 1 zeigt, an einer vorderen und/oder oberen Umfangsseite der Ballenformkammer 2 beispielsweise oberhalb des Einlasses 4 bzw. oberhalb der Aufnahmevorrichtung 5 angeordnet sein kann. Die genannte Wickelvorrichtung 6 umfasst einen Speicher für das Wickelgut 18, welches beispielsweise in Form einer Speicherrolle aufgewickelt sein kann, von der aus das Wickelgut 18 durch einen Einführspalt 11 in die Ballenformkammer 2 eingeführt werden kann, um im Inneren der Ballenformkammer 2 um einen jeweiligen Ballen gewickelt werden zu können.

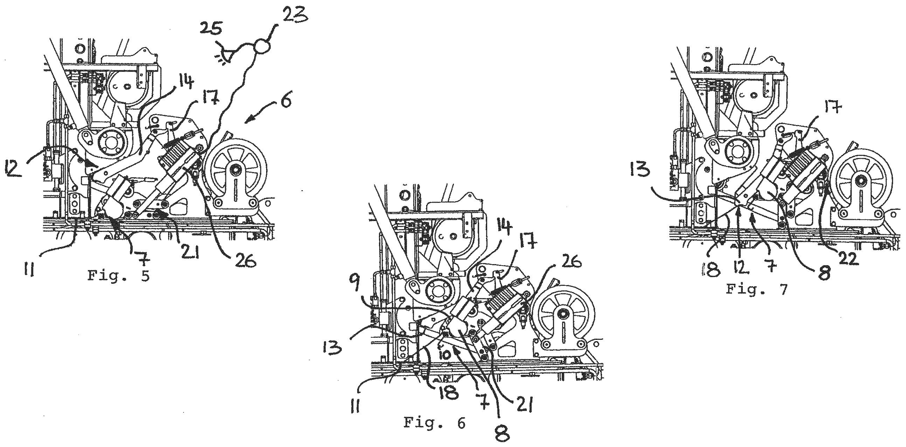

Hierzu umfasst die genannte Wickelvorrichtung 6 eine Zuführvorrichtung 7, mittels derer das Wickelgut 18 in den Einführspalt 11 eingefädelt bzw. aktiv durch den Einführspalt 11 hindurchgefördert werden kann, wie dies insbesondere die Fig. 5 zeigt.

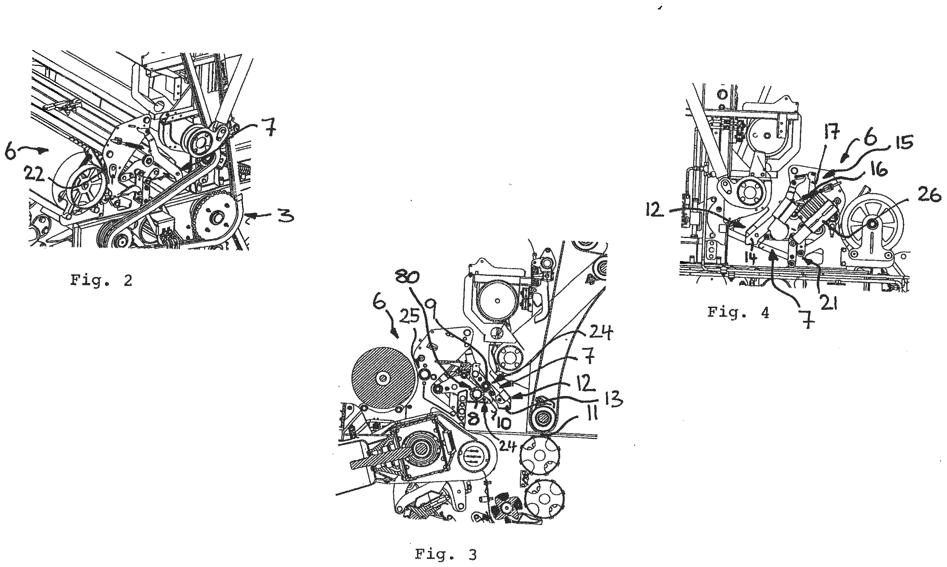

Die genannte Zuführvorrichtung 7 kann, wie die Figuren zeigen, einen Wickelgut-Vorschubantrieb 24 umfassen, der das Wickelgut 18 aktiv auf den genannten Einführspalt 11 zufördern kann. Der Wickelgut-Vorschubantrieb 24 kann grundsätzlich verschieden ausgebildet sein, wobei er, wie die Figuren 2-4 zeigen, zumindest ein Vorschubwalzenpaar 8 und 9 umfassen kann, zwischen denen das Wickelgut 18 hindurchgefördert werden kann. Von den genannten Vorschubwalzen bzw. -rollen 8 und 9 kann vorteilhafterweise eine angetrieben sein, wobei ggf. auch beide angetrieben sein können, und eine als Anpressrolle dienen, die gegen die andere vorgespannt ist, um das Wickelgut 18 verlässlich fördern zu können, ohne durchzurutschen. Gegebenenfalls kann die angetriebene Vorschubrolle mit einer geeigneten Oberflächenstruktur wie beispielsweise einer Gummibeschichtung versehen sein.

Im Auslaufbereich der genannten Vorschubrollen 8 und 9 kann eine zungenförmige Gleitführung 10 vorgesehen sein, um das von den Vorschubrollen 8 und 9 geförderte Wickelgut 18 gezielt auf den Einführspalt 11 zuzufördern bzw. in diesen hinein zu fördern. Die genannten Gleitführung 10 kann beispielsweise in Form einer vorspringenden Auflage- bzw. Führungszunge ausgebildet sein, die in der in Fig. 5 gezeigten Zuführstellung in den Einführspalt 11 führt.

Wie ein Vergleich der Figuren 2-7 zeigt, kann die gesamte Zuführvorrichtung 7 einschließlich der Vorschubrollen 8 und 9 und der Gleitführung 10 auf den Einführspalt 11 zugefahren und vom Einführspalt 11 weggefahren werden. Die Abstandsveränderbarkeit der Zuführvorrichtung 7 von dem Einführspalt 11 kann beispielsweise durch eine Lenkeranordnung 21 erzielt werden, mittels derer die Zuführvorrichtung gelagert ist. Die genannte Lenkeranordnung 21 kann hierbei als Parallelogrammlenkerführung ausgebildet sein und rechts und links jeweils ein Paar Führungslenker umfassen, die verschwenkbar an einem Maschinenrahmen angelenkt sind und gelenkig mit einem Chassisteil der Zuführvorrichtung 7 verbunden sind, an welchem Chassisteil die genannten Vorschubrollen 8 und 9 gelagert sind.

Durch einen Stellaktor 26 kann die Zuführvorrichtung 7 hin und her bewegt werden, wobei der genannte Stellaktor 26 beispielsweise ein doppelt wirkender Hydraulikzylinder sein kann.

Wie die Figuren 4 und 5 am besten zeigen, umfasst die Wickelvorrichtung 6 weiterhin eine Abtrennvorrichtung 12, die ein Messer 13 oder ein ähnliches Trennwerkzeug umfassen kann, welches gemäß der gezeichneten Ausführung an einem Schwenkarm 14 befestigt sein kann, mittels dessen die Abtrennvorrichtung 12 bzw. deren Messer 13 von dem Wickelgut 12 weggefahren bzw. mit dem Wickelgut 18 in Eingriff gebracht werden kann, um dieses abzutrennen. Wie die Figuren 6 und 7 zeigen, kann das Messer 13 dabei vorteilhafterweise so angeordnet bzw. der genannte Schwenkarm 14 so ausgebildet sein, dass der Schnitt bzw. Trennvorgang im Auslaufbereich der Vorschubrollen 8 und 9 bzw. im Bereich oder der Nachbarschaft der genannten Gleitführung 10 erfolgen kann, so dass das Ende des verbleibenden Wickelguts für einen neuen Einfädelprozess bereitsteht. Die Abtrennvorrichtung 12 ist mit ihrem Messer 13 in der Schneide- bzw. Trennstellung vor den Vorschubrollen 8 und 9 bzw. in deren Auslaufbereich positioniert, vgl. Fig. 7.

Die Betätigung der Abtrennvorrichtung 12 erfolgt hierbei mittels einer Spannvorrichtung 15, die eine Feder 16 oder ein anderes Vorspannungs-Speicherelement wie beispielsweise einen Gasdruckspeicher umfassen kann. Die genannte Spannvorrichtung 15 spannt die Abtrennvorrichtung 12 zu deren schneidenden Stellung hin vor bzw. treibt die Abtrennvorrichtung 12 auf diese Stellung zu. Das Spannen der genannten Spannvorrichtung 15 kann hierbei durch die Bewegung der Zuführvorrichtung 7 erfolgen. Wie ein Vergleich der Figuren 4 und 5 zeigt, wird durch Verfahren der Zuführvorrichtung 7 von deren Ausgangsstellung gemäß Fig. 4 in die Zuführstellung am Einführspalt 11 gemäß Fig. 5 zunächst die Abtrennvorrichtung 12 in eine Rückhaltestellung verbracht, in der das Messer 13 vom Wickelgut 18 weggefahren ist und die Abtrennvorrichtung 12 mit dem Einzugspfad des Wickelguts 18 nicht kollidiert. Beispielsweise kann die Zuführvorrichtung 7 an geeigneter Stelle einen Stellanschlag umfassen, der auf dem Verfahrweg der Zuführvorrichtung 7 von der Ausgangsstellung zur Zuführstellung mit dem Schwenkarm 14 in Eingriff gerät und diesen nach oben wegdrückt, bis der Schwenkarm 14 in eine Rückhaltevorrichtung 17 einschnappt. Die genannte Rückhaltevorrichtung 17 kann ein federvorgespannter Schnapper oder dergleichen sein, welcher den Schwenkarm 14 in der weggedrückten Stellung einfängt, vgl. im Vergleich die Figuren 4 und 5.

Ferner wird beim Verfahren der Zuführvorrichtung 7 in die genannte Zuführstellung gemäß Fig. 5 und/oder beim Wiederzurückbewegen in die Zwischenstellung gemäß Fig. 6 die Spannvorrichtung 15 gespannt, was beispielsweise beim Nach-oben-Wegdrücken des Schwenkarms 14 erfolgen kann, an dem die Feder 16 angreifen kann.

Wird die Zuführvorrichtung 7 von der in Fig. 6 gezeigten Zwischenstellung weiter zurück in die Ausgangsstellung gemäß Fig. 7 gefahren, löst die Zuführvorrichtung 7 die genannte Rückhaltevorrichtung 17, so dass die Abtrennvorrichtung 12 in ihre Schneidstellung schnappen und dabei das Wickelgut 18 durchtrennen kann. An der Zuführvorrichtung 7 kann hierbei ein Auslöseanschlag vorgesehen sein, welcher den Schnapper der Rückhaltevorrichtung 17 wegdrücken kann, wenn die Zuführvorrichtung 7 in die Ausgangsstellung fährt.

Hiermit kann ein Funktionszyklus wie folgt durchlaufen werden: Zunächst fährt die Zuführvorrichtung 7 aus der in Fig. 4 gezeigten Ausgangsstellung durch Verschwenken der Lenkeranordnung 21 nach vorne in die Zuführstellung zum Einführspalt 11 hin, wie dies Fig. 5 dann zeigt. Durch dieses Nach-vorne-Fahren wird der Schwenkarm 14 der Abtrennvorrichtung 12 nach oben gedrückt, so dass er in der Rückhaltevorrichtung 17 einschnappt. In der genannten Zuführstellung gemäß Fig. 5 wird sodann für eine gewisse Zeitspanne beispielsweise von einigen Sekunden der Wickelgut-Vorschubantrieb 24 in Gang gesetzt, so dass die Vorschubrollen 8 und 9 das Wickelgut 18 in den Einführspalt 11 hinein fördern. Sodann schaltet die Steuervorrichtung 23 den Wickelgut-Vorschubantrieb 24 ab, um durch eine Erfassungseinrichtung 25, die beispielsweise die Drehzahl einer Breitstreckwalze überwachen kann, zu prüfen, ob das Wickelgut 18 auch bei abgeschaltetem Vorschubantrieb 24 von der Rolle abgezogen bzw. in den Einführspalt hineingezogen wird. Ist dies der Fall, ist der Wickelvorgang erfolgreich gestartet, wobei das Wickelgut 18 mit dem Ballen in der Ballenformkammer 2 in Eingriff gelangt und von diesem weiter hineingezogen wird. Stellt die Erfassungsvorrichtung 25 indes bei abgeschaltetem Vorschubantrieb 24 keinen weiteren Wickelgut-Vorschub fest, kann die Steuervorrichtung 23 den genannten Wickelgut-Vorschubantrieb erneut für eine gewisse Zeitspanne einschalten, um dann erneut durch die Erfassungseinrichtung 25 zu prüfen, ob auch bei abgeschaltetem Vortrieb ein Einzug erfolgt. Ist dies wiederum nicht der Fall, kann die Prozedur erneut wiederholt oder ein Fehlersignal abgegeben werden, welches einem Maschinenführer angibt, dass ein Fehler aufgetreten ist.

Ist das Wickelgut 18 erfolgreich eingefädelt, fährt die Zuführvorrichtung 7 vom Einführspalt 11 weg in die in Fig. 6 gezeigte Zwischenstellung, in welcher der Wickelprozess dann erfolgt. Durch dieses Zurückfahren in die Zwischenstellung gemäß Fig. 6 kann eine Bremse 22, die das Abziehen bzw. Einziehen des Wickelguts 18 bremst, wieder angelegt werden. Zuvor wurde die genannte Bremse 22 gelöst, so dass in der Zuführstellung das Wickelgut 18 ungebremst eingeführt werden kann. Die Bremse 22 wird hierbei ebenfalls durch die vorgenannte Bewegung der Zuführvorrichtung 7 aktiviert und deaktiviert bzw. gelöst und wieder stärker angelegt. Dies kann beispielsweise dadurch erfolgen, dass ein Bremshebel mit einem geeigneten Bremsanschlag an der Zuführvorrichtung 7 in und außer Eingriff gebracht wird, wenn die Zuführvorrichtung 7 hin und her gefahren wird. Beispielsweise kann die genannte Bremse 22 auf die Speicherwickelrolle wirken, von der das Wickelgut 18 abgezogen wird.

Durch leichtes Anlegen der Bremse 22 in der in Fig. 6 gezeigten Zwischenstellung kann beim Abspulen bzw. Umwickeln eine leichte Spannung bzw. Straffung des Wickelguts 18 erreicht werden, so dass der Ballen sauber umwickelt wird.

Ist der Ballen nahezu fertig umwickelt, kann die Zuführvorrichtung 7 aus der in Fig. 6 gezeigten Zwischenstellung ein Stück weiter vom Einführspalt 11 weg auf die Ausgangsstellung zu verfahren werden. Hierdurch wird die Rückhaltevorrichtung 17 gelöst, so dass die Abtrennvorrichtung 12 auf das Wickelgut 18 zuschnappen und dieses durchtrennen kann, wie dies Fig. 7 zeigt.

Die in Fig. 7 gezeigte Abtrennstellung ist gleichzeitig die Ausgangsstellung für einen neuen Wickelprozess, d.h. die Wickelvorrichtung 6 ist ohne weitere Verfahrvorgänge gleich wieder bereit für einen neuen Wickelprozess.

## Patentansprüche

1. Ballenpresse für landwirtschaftliches Erntegut, mit einer Ballenformkammer (2) zum Formen des Ernteguts zu Ballen sowie einer Wickelvorrichtung (6) zum Umwickeln der Ballen mit einem Wickelgut (18) wie Netz, Folie und/oder Schnur, wobei die Wickelvorrichtung (6) eine Zuführvorrichtung (7) zum Zuführen des Wickelguts (18) durch einen Einführspalt (11) in die Ballenformkammer (2) aufweist, wobei die Zuführvorrichtung (7) auf den Einführspalt (11) zu in eine Zuführstellung und von dem Einführspalt (11) weg in eine Zwischen- und/oder Ausgangsstellung bewegbar ausgebildet ist, wobei die Zuführvorrichtung (7) lediglich einen antreibbaren Vorschubgeber (80) zum aktiven Zuführen des Wickelguts (18) umfasst, wobei der Vorschubgeber (80) auf den Einführspalt (11) zu in die Zuführstellung und von dem Einführspalt (11) weg in die Zwischen- und/oder Ausgangsstellung bewegbar ausgebildet ist und zumindest in der genannten Zuführstellung antreibbar ist, wobei eine Steuervorrichtung (23) zur Steuerung eines Wickelgut-Vorschubantriebs (24) sowie eine Erfassungseinrichtung (25) zur Erfassung einer Vorschubbewegung des Wickelguts (18) vorgesehen sind, **dadurch gekennzeichnet, dass** die Steuervorrichtung (23) dazu ausgebildet ist, den Wickelgut-Vorschubantrieb (24), wenn der Vorschubgeber (80) an den Einführspalt (11) hingefahren ist, einzuschalten und auszuschalten, wobei nach Abschalten des Wickelgut-Vorschubantriebs (24) von der Erfassungseinrichtung (25) geprüft wird, ob das Wickelgut (18) auch bei abgeschaltetem Wickelgut-Vorschubantrieb (24) einen Vorschub erfährt, wobei dann, wenn von der Erfassungseinrichtung (25) kein Vorschub des Wickelguts (18) feststellbar ist, von der Steuervorrichtung (23) der Wickelgut-Vorschubantrieb (24) ein weiteres Mal eingeschaltet wird.

2. Ballenpresse nach dem vorhergehenden Anspruch, wobei der genannte Vorschubgeber (80) aus einem Paar zusammenwirkender Vorschubrollen (8, 9) besteht, zwischen denen das Wickelgut (18) hindurch förderbar ist und von denen zumindest eine Vorschubrolle (8, 9) antreibbar ausgebildet ist.

3. Ballenpresse nach einem der vorhergehenden Ansprüche, wobei der genannte Vorschubgeber (80) mittels einer Lenkeranordnung (21), insbesondere Parallelogrammlenkeranordnung, zwischen der genannten Ausgangsstellung, der Zuführstellung und der Zwischenstellung hin und her bewegbar ist, insbesondere auf einer bogenförmigen Bewegungsbahn.

4. Ballenpresse nach einem der vorhergehenden Ansprüche, wobei der genannte Vorschubgeber (80) von einem Vorschubantrieb (24) antreibbar ist, der hinsichtlich seiner für den Vorschubgeber (80) bereitgestellten Vorschubgeschwindigkeit unabhängig von Antriebsgeschwindigkeiten anderer Ballenpressenfunktionselementen wie Ballenformwalzen einstellbar ausgebildet ist, wobei der genannte Vorschubantrieb (24) zusammen mit dem Vorschubgeber (80) auf den Einführspalt (11) zu und von diesem weg bewegbar ausgebildet ist.

5. Ballenpresse nach einem der beiden vorhergehenden Ansprüche, wobei der Antrieb mechanisch entkoppelt von anderen Ballenpressenfunktionselementen ausgebildet ist und einen drehzahlvariabel steuerbaren Elektro- oder Hydromotor zum Antreiben des Vorschubgebers (80) aufweist.

6. Ballenpresse nach einem der vorhergehenden Ansprüche, wobei zwischen dem Vorschubgeber (80) und dem Einführspalt (11) eine Führungsbahn, vorzugsweise in Form einer Gleitführung (10), zum Abstützen und Führen des Wickelguts (18) vorgesehen ist, die zusammen mit dem Vorschubgeber (80) auf den Einführspalt (11) zu und von dem Einführspalt (11) weg verfahrbar ausgebildet ist.

7. Ballenpresse nach einem der vorhergehenden Ansprüche, wobei eine Abtrennvorrichtung (12) zum Abtrennen des Wickelguts (18) vorgesehen ist, wobei der Abtrennvorrichtung (12) eine Spannvorrichtung (15) zugeordnet ist, die durch Bewegen der Zuführvorrichtung (7) in die Zuführstellung und/oder zurück in die Zwischenstellung spannbar ist, und eine Rückhaltevorrichtung (17) zum Rückhalten der Abtrennvorrichtung (12) entgegen der Spannkraft der Spannvorrichtung (15) zugeordnet ist, welche Rückhaltevorrichtung (17) durch Bewegen der Zuführvorrichtung (7) von der genannten Zwischenstellung in die Ausgangsstellung lösbar ist, sodass die Abtrennvorrichtung (12) von der Spannvorrichtung (15) getrieben das Wickelgut (18) durchtrennt.

8. Ballenpresse nach dem vorhergehenden Anspruch, wobei die Abtrennvorrichtung (12) durch Bewegen der Zuführvorrichtung (7) von der Ausgangsstellung in die Zuführstellung in eine Rückhaltestellung bewegbar ist, in der die Abtrennvorrichtung (12) von der Rückhaltevorrichtung (17) zurückgehalten und vom Wickelgut (18) außer Eingriff ist.

9. Ballenpresse nach dem vorhergehenden Anspruch, wobei mit der Zuführvorrichtung (7) ein Stellanschlag verbunden ist, der beim Bewegen der Zuführvorrichtung (7) von der Ausgangsstellung in die Zuführstellung mit der Abtrennvorrichtung (12) in Eingriff gerät und/oder die Abtrennvorrichtung (12) in die Rückhaltestellung zwingt.

10. Ballenpresse nach einem der vorhergehenden Ansprüche, wobei mit der Zuführvorrichtung (7) ein Auslöseanschlag verbunden ist, der beim Bewegen der Zuführvorrichtung (7) von der Zwischenstellung in die Ausgangsstellung mit der Rückhaltevorrichtung (17) in Eingriff gerät und/oder die Rückhaltevorrichtung (17) in eine von der Abtrennvorrichtung (12) gelöste Stellung zwingt.

11. Ballenpresse nach einem der vorhergehenden Ansprüche, wobei die Abtrennvorrichtung (12) ein Trennwerkzeug (13) umfasst, das mittels zumindest eines Schwenkarms (14) gelagert ist, der schwenkbar an einem feststehenden, sich mit der Zuführvorrichtung (7) nicht mitbewegenden Rahmenteil der Wickelvorrichtung (6) und/oder der Ballenpresse (1) gelagert ist.

12. Ballenpresse nach einem der vorhergehenden Ansprüche, wobei die Rückhaltevorrichtung (17) und/oder die Spannvorrichtung (15) der Abtrennvorrichtung (12) an dem/einem feststehenden, sich mit der Zuführvorrichtung (7) nicht mitbewegenden Rahmenteil der Wickelvorrichtung (6) und/oder der Ballenpresse (1) gelagert ist.

13. Ballenpresse nach einem der vorhergehenden Ansprüche, wobei eine Bremse (22) zum Abbremsen des Einziehens des Wickelguts (18) vorgesehen ist, die durch Bewegen der Zuführvorrichtung (7) aktivierbar und/oder deaktivierbar ist derart, dass die Bremse (22) beim Bewegen der Zuführvorrichtung (7) in die Zuführstellung deaktiviert oder gelockert wird und bei Bewegen der Zuführvorrichtung (7) in die Ausgangsstellung aktiviert wird, wobei die Bremse (22) vorzugsweise beim Bewegen der Zuführvorrichtung (7) von der Zuführstellung in die Zwischenstellung bereits aktiviert wird.

14. Ballenpresse nach einem der vorhergehenden Ansprüche, wobei ein Stellantrieb (26) zum Verstellen der Zuführvorrichtung (7) auf den Einführspalt (11) zu und/oder von dem Einführspalt (11) weg von einer/der Steuervorrichtung (23) in Abhängigkeit des Ballenformprozesses in der Ballenformkammer (2) steurbar ist, wobei die genannten Steuervorrichtung (23) mit Bestimmungsmitteln zum Bestimmen einer Ballengröße und/oder Ballenpressdichte eines in der Ballenformkammer (2) geformten Ballens verbindbar ist und in Abhängigkeit eines Signals der Bestimmungsmittel die Zuführvorrichtung (7) vor Beendigung des Ballenformvorgangs in die Zwischenstellung verfährt.

## Claims

1. A baler for agricultural harvested produce comprising a bale forming chamber (2) for forming the harvested produce into bales and a winding apparatus (6) for winding a winding product (18) such as a net, a film and/or a string around the bales, wherein the winding apparatus (6) has a feed apparatus (7) for feeding the winding product (18) through an introduction gap (11) into the bale forming chamber (2); wherein the feed apparatus (7) is configured as movable toward the introduction gap (11) into a feed position and away from the introduction gap (11) into an intermediate and/or starting position; wherein the feed apparatus (7) only comprises a drivable infeed provider (80) for the active feeding of the winding product (18); and wherein the infeed provider (80) is configured as movable toward the introduction gap (11) into the feed position and away from the introduction gap (11) into the intermediate and/or starting position and is at least drivable in said feed position, with a control apparatus (23) being provided for controlling a winding product infeed drive (24) and a detection device (25) for detecting an infeed movement of the winding product (18), **characterized in that** the control apparatus (23) is configured to switch the winding product infeed drive (24) on and off when the infeed provider (80) is moved toward the introduction gap (11), with a check being made by the detection device (25) after the switching off of the winding product infeed drive (24) whether the winding product (18) also undergoes an infeed with a switched off winding product infeed drive (24); and with the winding product infeed drive (24) being switched on once more by the control apparatus (23) if no infeed of the winding product (18) can be determined by the detection device (25).

2. A baler in accordance with the preceding claim, wherein said infeed provider (80) consists of a pair of interacting infeed rollers (8, 9) between which the winding product (18) is conveyable and of which at least one infeed roller (8, 9) is configured as drivable.

3. A baler in accordance with one of the preceding claims, wherein said infeed provider (80) is movable to and fro between said starting position, said feed position, and said intermediate position, in particular on an arcuate movement path, by means of a control arm arrangement (21), in particular a parallelogram control arm arrangement.

4. A baler in accordance with one of the preceding claims, wherein said infeed provider (80) is drivable by an infeed drive (24) that is configured as adjustable with respect to its infeed speed provided for the infeed provider (80) independently of drive speeds of other functional baler elements such as bale forming rolls, with said infeed drive (24) being configured as movable together with the infeed provider (80) toward and away from the introduction gap (11).

5. A baler in accordance with one of the two preceding claims, wherein the drive is configured as mechanically decoupled from other functional baler elements and has an electric motor or a hydraulic motor controllable at variable speeds for driving the infeed provider (80).

6. A baler in accordance with one of the preceding claims, wherein a guide path, preferably in the form of a slide guide (10) is provided between the infeed provider (80) and the introduction gap (11) for supporting and guiding the winding product (18) and is configured as travelable together with the infeed provider (80) toward the introduction gap (11) and away from the introduction gap (11).

7. A baler in accordance with one of the preceding claims, wherein a cutting apparatus (12) is provided for cutting off the winding product (18), with a clamping apparatus (15) being associated with the cutting apparatus (12) that is tensionable into the feed position and/or back into the intermediate position by moving the feed apparatus (7) and with a retention apparatus (17) being associated with the tensioning apparatus (15) for holding back the cutting apparatus (12) against the tensioning force of the tensioning apparatus (15), said retention apparatus (17) being releasable by moving the feed apparatus (7) from said intermediate position into the starting position such that the cutting apparatus (12) cuts through the winding product (18) driven by the clamping apparatus (15).

8. A baler in accordance with the preceding claim, wherein the cutting apparatus (12) is movable by moving the feed apparatus (7) from the starting position into the feed position into a retention position in which the cutting apparatus (12) is held back by the retention apparatus (17) and is out of engagement with the winding product (18).

9. A baler in accordance with the preceding claim, wherein a positional abutment is connected to the feed apparatus (7), said positional abutment moving into engagement with the cutting apparatus (12) on the moving of the feed apparatus (7) from the starting position into the feed position and/or forcing the cutting apparatus (12) into the holding back position.

10. A baler in accordance with one of the preceding claims, wherein a release abutment is connected to the feed apparatus (7), said release abutment moving into engagement with the retention apparatus (17) on the moving of the feed apparatus (7) from the intermediate position into the starting position and/or forcing the retention apparatus (17) into a position released from the cutting apparatus (12).

11. A baler in accordance with one of the preceding claims, wherein the cutting apparatus (12) comprises a cutting tool (13) that is supported by means of at least one pivot arm (14) that is pivotably supported at a fixed-position frame part of the winding apparatus (6) and/or of the baler (1) that does not move along with the feed apparatus (7).

12. A baler in accordance with one of the preceding claims, wherein the retention apparatus (17) and/or the clamping apparatus (15) of the cutting apparatus (12) is supported at the/a fixed-position frame part of the winding apparatus (6) and/or of the baler (1) that does not move along with the feed apparatus (7).

13. A baler in accordance with one of the preceding claims, wherein a brake (22) for braking the drawing in of the winding product (18) is provided that can be activated and/or deactivated by moving the feed apparatus (7) such that the brake (22) is deactivated or loosened on the moving of the feed apparatus (7) into the feed position and being activated on a moving of the feed apparatus (7) into the starting position, with the brake (22) preferably already being activated on the movement of the feed apparatus (7) from the feed position into the intermediate position.

14. A baler in accordance with one of the preceding claims, wherein a positional drive (26) for adjusting the feed apparatus (7) toward the introduction gap (11) and/or away from the introduction gap (11) is controllable by a/the control apparatus (23) in dependence on the baling process in the bale forming chamber (2); wherein said control apparatus (23) is connectable to determination means for determining a bale size and/or a bale pressing density of a bale formed in the bale forming chamber (2); and wherein the feed apparatus (7) travels into the intermediate position before the end of the bale forming process in dependence on a signal of the determination means.

## Revendications

1. Presse à balles pour récolte agricole, comprenant une chambre de formation de balles (2) destinée à former la récolte en balles ainsi qu'un dispositif d'enroulement (6) destiné à enrouler les balles avec un matériau d'enroulement (18) tel qu'un filet, un film et/ou de la ficelle,
le dispositif d'enroulement (6) comportant un dispositif d'alimentation (7) destiné à alimenter le matériau d'enroulement (18) dans la chambre de formation de balles (2) par une fente d'introduction (11),
le dispositif d'alimentation (7) étant réalisé mobile en direction de la fente d'introduction (11) dans une position d'alimentation et dans la direction s'éloignant de la fente d'introduction (11) dans une position intermédiaire et/ou initiale,
le dispositif d'alimentation (7) comprenant uniquement un organe de génération d'avance (80) pouvant être entraîné, destiné à alimenter activement le matériau d'enroulement (18),
l'organe de génération d'avance (80) étant réalisé mobile en direction de la fente d'introduction (11) dans la position d'alimentation et dans la direction s'éloignant de la fente d'introduction (11) dans la position intermédiaire et/ou initiale et pouvant être entraîné au moins dans ladite position d'alimentation, un dispositif de commande (23) pour la commande d'un entraînement d'avance de matériau d'enroulement (24) ainsi qu'un système de détection (25) pour la détection d'un mouvement d'avance du matériau d'enroulement (18) étant prévus,
**caractérisée en ce que**
le dispositif de commande (23) est conçu pour activer et désactiver l'entraînement d'avance de matériau d'enroulement (24), quand l'organe de génération d'avance (80) est transporté vers la fente d'introduction (11), le système de détection (25) contrôlant après la désactivation de l'entraînement d'avance de matériau d'enroulement (24) si le matériau d'enroulement (18) est alimenté même lorsque l'entraînement d'avance de matériau d'enroulement (24) est arrêté, et
l'entraînement d'avance de matériau d'enroulement (24) étant activé une nouvelle fois par le dispositif de commande (23) quand aucune avance du matériau d'enroulement (18) n'est constatée par le système de détection (25).

2. Presse à balles selon la revendication précédente, dans laquelle ledit organe de génération d'avance (80) est constitué d'une paire de rouleaux d'avance (8, 9) coopérant, entre lesquels le matériau d'enroulement (18) peut être transporté et dont au moins un rouleau d'avance (8, 9) est réalisé de manière à pouvoir être entraîné.

3. Presse à balles selon l'une des revendications précédentes, dans laquelle ledit organe de génération d'avance (80) est mobile en va-et-vient, en particulier sur une trajectoire en forme d'arc, entre ladite position initiale, la position d'alimentation et la position intermédiaire, au moyen d'un agencement de barres directrices (21), en particulier un agencement de barres directrices en parallélogramme.

4. Presse à balles selon l'une des revendications précédentes, dans laquelle ledit organe de génération d'avance (80) peut être entraîné par un entraînement d'avance (24), qui est réalisé, en ce qui concerne sa vitesse d'avance mise à disposition pour l'organe de génération d'avance (80), réglable indépendamment de vitesses d'entraînement d'autres éléments fonctionnels de la presse à balles tels que des cylindres de formation de balles, ledit entraînement d'avance (24) étant réalisé mobile conjointement avec l'organe de génération d'avance (80) en direction de la fente d'introduction (11) et dans la direction s'en éloignant.

5. Presse à balles selon l'une des deux revendications précédentes, dans laquelle l'entraînement est réalisé mécaniquement découplé d'autres éléments fonctionnels de la presse à balles et comporte un moteur électrique ou hydraulique pouvant être commandé à vitesse variable destiné à l'entraînement de l'organe de génération d'avance (80).

6. Presse à balles selon l'une des revendications précédentes, dans laquelle est prévue entre l'organe de génération d'avance (80) et la fente d'introduction (11) une voie de guidage, de préférence sous la forme d'une glissière de guidage (10), pour supporter et guider le matériau d'enroulement (18), qui est réalisée déplaçable conjointement avec l'organe de génération d'avance (80) en direction de la fente d'introduction (11) et dans la direction s'éloignant de la fente d'introduction (11).

7. Presse à balles selon l'une des revendications précédentes, dans laquelle un dispositif de séparation (12) est prévu pour couper le matériau d'enroulement (18), un dispositif tendeur (15), qui peut être tendu par le déplacement du dispositif d'alimentation (7) dans la position d'alimentation et/ou de retour dans la position intermédiaire, ainsi qu'un dispositif de retenue (17) pour retenir le dispositif de séparation (12) contre la force de tension du dispositif tendeur (15), étant associés au dispositif de séparation (12), ledit dispositif de retenue (17) pouvant être libéré par le déplacement du dispositif d'alimentation (7) de ladite position intermédiaire à la position initiale, de sorte que le dispositif de séparation (12), entraîné par le dispositif tendeur (15), coupe le matériau d'enroulement (18).

8. Presse à balles selon la revendication précédente, dans laquelle le dispositif de séparation (12) peut être déplacé, par le déplacement du dispositif d'alimentation (7) de la position initiale à la position d'alimentation, dans une position de retenue, dans laquelle le dispositif de séparation (12) est retenu par le dispositif de retenue (17) et dégagé du matériau d'enroulement (18).

9. Presse à balles selon la revendication précédente, dans laquelle une butée de commande est reliée au dispositif d'alimentation (7), laquelle, lors du déplacement du dispositif d'alimentation (7) de la position initiale à la position d'alimentation, vient en prise avec le dispositif de séparation (12) et/ou force le dispositif de séparation (12) dans la position de retenue.

10. Presse à balles selon l'une des revendications précédentes, dans laquelle une butée de déclenchement est reliée au dispositif d'alimentation (7), laquelle, lors du déplacement du dispositif d'alimentation (7) de la position intermédiaire à la position initiale, vient en prise avec le dispositif de retenue (17) et/ou force le dispositif de retenue (17) dans une position libérée du dispositif de séparation (12).

11. Presse à balles selon l'une des revendications précédentes, dans laquelle le dispositif de séparation (12) comprend un outil de coupe (13), qui est monté au moyen d'au moins un bras pivotant (14), qui est monté pivotant sur une partie de cadre fixe du dispositif d'enroulement (6) et/ou de la presse à balles (1) qui ne se déplace pas avec le dispositif d'alimentation (7).

12. Presse à balles selon l'une des revendications précédentes, dans laquelle le dispositif de retenue (17) et/ou le dispositif tendeur (15) du dispositif de séparation (12) est/sont monté(s) sur la/une partie de cadre fixe du dispositif d'enroulement (6) et/ou de la presse à balles (1) qui ne se déplace pas avec le dispositif d'alimentation (7).

13. Presse à balles selon l'une des revendications précédentes, dans laquelle un frein (22) est prévu pour le freinage de la rétraction du matériau d'enroulement (18), ledit frein étant activable et/ou désactivable par le déplacement du dispositif d'alimentation (7) de telle manière que le frein (22) est désactivé ou desserré lors du déplacement du dispositif d'alimentation (7) dans la position d'alimentation et activé lors du déplacement du dispositif d'alimentation (7) dans la position initiale, le frein (22) étant de préférence déjà activé lors du déplacement du dispositif d'alimentation (7) de la position d'alimentation à la position intermédiaire.

14. Presse à balles selon l'une des revendications précédentes, dans laquelle un actionneur (26) destiné à déplacer le dispositif d'alimentation (7) en direction de la fente d'introduction (11) et/ou dans la direction s'éloignant de la fente d'introduction (11) peut être commandé par un/le dispositif de commande (23) en fonction du processus de formation de balles dans la chambre de formation de balles (2),
ledit dispositif de commande (23) pouvant être relié à des moyens de détermination destinés à déterminer une taille de balle et/ou densité de compression de balle d'une balle formée dans la chambre de formation de balles (2) et déplaçant le dispositif d'alimentation (7) dans la position intermédiaire avant la fin du processus de formation de balles en fonction d'un signal des moyens de détermination.
